# NEW EUROPEAN PATENT SPECIFICATION

(11) **EP 1 266 690 B2**
(45) Date of publication and mention of the opposition decision: **21.03.2012**
(45) Mention of the grant of the patent: 22.02.2006
(21) Application number: 02253690.8
(22) Date of filing: 24.05.2002
(51) Int. Cl.: B01J 49/00, C02F 1/42, C08F 8/00, B01J 39/20

(54) **Preparation of weak acid cation exchange resins**
Herstellung von schwach sauren Kationaustauschharzen
Préparation de résines échangeuses d'ions faiblement acides

(30) Priority: 04.06.2001 US 873806
(43) Date of publication of application: 18.12.2002
(73) Proprietor: ROHM AND HAAS COMPANY, Philadelphia, Pennsylvania 19106-2399 (US)
(72) Inventor: Bohling, James Charles, Lansdale, Pennsylvania 19446 (US); Lundquist, Eric Gustave, North Wales, Pennsylvania 19454 (US)
(74) Representative: Kent, Venetia Katherine

(56) References cited:
- EP-A1- 0 406 648
- EP-A2- 1 110 608
- DD-A9- 301 934
- FR-A- 1 493 519
- GB-A- 1 261 074
- US-A- 3 262 876
- US-A- 3 544 488
- US-A- 4 614 751
- US-A- 5 858 119
- PATENT ABSTRACTS OF JAPAN vol. 018, no. 288 (C-1207), 2 June 1994 (1994-06-02) & JP 06 055079 A (IDEMITSU PETROCHEM CO LTD), 1 March 1994 (1994-03-01)
- PETER MEYERS: 'Applications of weak acid cation resin in waste treatment' June 1999, AESF CONFERENCE,

## Description

### BACKGROUND

This invention relates to an improved process for the preparation of weak acid cation exchange resins. In particular the present invention concerns the cleaning of weak acid cation exchange resins derived from crosslinked poly(acrylonitrile).

Weak acid cation exchange resins have found great utility in the removal of hardness ions (for example, calcium and magnesium) and certain metals (lead, mercury, copper, zinc) from drinking water. The high ion exchange capacity and selectivity of weak acid cation exchange resins are ideal properties in this application. As such, the combination of weak acid cation exchange resins with activated carbon in mixed-bed systems has found widespread use in potable water treatment applications, such as water-pitcher filter applications for drinking water. It is desirable that the weak acid cation exchange resins should not release any extractable materials from the resin into the treated water. These extractable materials are typically byproducts from the ion exchange manufacturing process.

Thus, the cleaning of weak acid cation exchange resins to remove extractables (such as uncrosslinked polymer chains, initiator residues and other contaminants) is critical to acceptable performance in many end-use applications. Without proper cleaning the resins may release materials into the treated water, resulting in foaming, color throw, odor, high TOC (total organic carbon) values and other undesirable effects.

When adsorbents, such as activated carbon, are used in conjunction with weak acid cation exchange resins to remove organic materials (such as trihalomethanes or THM) from drinking water, we have found that materials released from the weak acid cation exchange resin become adsorbed onto the surface of the activated carbon, consequently fouling the surface and pores of the carbon and consequently reducing the ability of the carbon to efficiently remove THM from the drinking water.

Weak acid cation exchange resins are typically manufactured by the suspension polymerization of hydrolyzable acrylic monomers (such as acrylonitrile, methyl acrylate and other acrylate esters) with a suitable crosslinking monomer (such as divinylbenzene (DVB), trivinylcyclohexane (TVCH), 1,7-octadiene or diethyleneglycol divinylether). These crosslinked copolymers are then hydrolyzed either under acidic or basic conditions to provide the corresponding polycarboxylic acid products.

Both acid-catalyzed and base-catalyzed hydrolyses of crosslinked poly(acrylonitrile) bead polymer present problems that must be addressed during the manufacturing process for weak acid cation exchange resins. For example, acid hydrolysis (sulfuric acid) typically proceeds with the vigorous evolution of heat, making the hydrolysis difficult to control on an industrial scale; in addition, large quantities of waste sulfuric acid are generated during the hydrolysis. The waste sulfuric acid is further contaminated by salts (ammonium sulfate) resulting from in-process neutralization of ammonia during hydrolysis, requiring further time-consuming efforts to process materials for disposal or reuse.

Alkaline (basic) hydrolysis is typically performed by contacting the crosslinked poly(acrylonitrile) bead polymer with aqueous, alcoholic or mixed aqueous-alcoholic alkali metal hydroxide solutions at elevated temperatures under reflux or in closed pressure vessels (autoclaves) until hydrolysis is complete. The generation of ammonia results in safety concerns similar to those discussed for the acid hydrolysis reaction: vigorous evolution of heat, plus the sporadic generation of gaseous ammonia during hydrolysis.

Similarly, acid-catalyzed and base-catalyzed hydrolyses of crosslinked poly(alkyl acrylate) materials generate waste streams and byproduct contaminants during the manufacturing process of weak acid cation exchange resins, for example, volatile (C₁-C₄)alcohols and corresponding ether compounds resulting from condensation of the alcohols.

In addition to the aforementioned safety and environmental issues inherent in the manufacturing process, the resultant weak acid cation exchange resin intermediates must be extensively cleaned to remove byproducts generated during the manufacturing process. Such cleaning steps are mandated to ensure the quality of the weak acid cation exchange resin materials used in treatment systems for drinking water applications. Previous efforts (U.S. Patent Nos. 3,544,488 and 3,687,912) to minimize the amount of byproducts in hydrolyzed poly(acrylonitrile) resins include the use of selected co-crosslinking agents (in addition to DVB). U.S. Patent No. 5,175,193 discloses the alkaline hydrolysis of crosslinked poly(acrylonitrile) where the alkaline hydrolyzing agent and the crosslinked poly(acrylonitrile) are brought together only at elevated temperatures, that is, greater than 105°C. However, resins from the above treatments still require extensive cleaning before they may be used in typical drinking water applications.

The problem addressed by the present invention is to overcome the deficiencies of prior methods used to reduce the presence of contaminants from the manufacturing process in the final weak acid cation exchange resin while still relying on the conventional hydrolyses reactions of crosslinked polycarboxylate resin precursors to provide the desired weak acid cation exchange resin.

### STATEMENT OF INVENTION

The present invention provides a process for cleaning weak acid cation exchange resins comprising (a) converting a weak acid cation exchange resin, substantially in neutralized salt form, to a hydrogen-form weak acid cation exchange resin by regenerating with an acid regenerant; and (b) contacting the hydrogen-form weak acid cation exchange resin with 1 to 15 kilograms of steam per kilogram of hydrogen-form weak acid cation exchange resin at a resin bed temperature of 100 to 180°C for a period of at least one hour.

In a further embodiment the present invention provides the aformentioned process wherein the weak acid cation exchange resin is selected from one or more copolymers of crosslinked poly(acrylic acid), crosslinked poly(methacrylic acid), hydrolyzed crosslinked poly((C₁-C₄)alkyl acrylate) and hydrolyzed crosslinked poly(acrylonitrile).

### DETAILED DESCRIPTION

We have discovered an improved process for effectively cleaning weak acid cation exchange resin intermediates that results in finished weak acid cation exchange resins that provide improved performance of water-treatment systems. The process of the present invention is applicable to weak acid cation exchange resins derived from either acidic or basic hydrolyses of crosslinked polycarboxylate resin precursors. We have found that selected steam treatment at a specified point in the processing of the weak acid cation exchange resin is critical to providing a final weak acid cation exchange resin useful as a component in potable water treatment systems, such as cartridge-water-pitcher systems having enhanced THM removal efficiency.

As used herein, the following terms have the designated definitions, unless the context clearly indicates otherwise. The term "crosslinked polycarboxylate resin precursor" will refer to any polymer capable of providing a weak acid cation exchange resin either by direct copolymerization of acrylic acid or methacrylic acid monomers with crosslinking monomers or by copolymerization of acid-precursor monomers (such as acrylonitrile or (C₁-C₄)alkyl acrylates) that are subsequently hydrolyzable to carboxylic acid groups. The term "copolymer" refers to polymer compositions containing units of two or more different monomers, including positional isomers. THM is used as an acronym for "trihalomethanes" (which include chloroform, bromodichloromethane, dibromochloromethane and bromoform, for example); the removal of chloroform from fluid streams in various test methods is typically used as an indication of THM removal efficiency of water treatment systems containing weak acid cation exchange resins as one component.

The following abbreviations are used herein: WAC = weak acid cation exchange resin; g = grams; kg = kilograms; L = liters; ml = milliliters; cm = centimeter; ppb = parts per billion by weight/volume; pressure is in kiloPascals (kPa). Unless otherwise specified, ranges listed are to be read as inclusive and combinable, temperatures are in degrees centigrade (°C), and references to percentages (%) are by weight.

The process of the present invention is useful for treatment of WAC produced by a variety of manufacturing processes. Suitable weak acid cation exchange resins include, for example, those derived from crosslinked poly(acrylic acid), crosslinked poly(methacrylic acid), hydrolyzed crosslinked poly((C₁-C₄)-alkyl acrylate) and hydrolyzed crosslinked poly(acrylonitrile); it is understood that these polymers may be copolymers comprising one or more of acrylic acid, methacrylic acid, (C₁-C₄)alkyl acrylate and acrylonitrile monomer units in polymerized form. Suitable crosslinking agents useful in preparing the aforementioned crosslinked polymers include, for example, aromatic polyvinyl compounds (such as divinylbenzene, trivinylbenzene, divinyltoluene, divinylpyridine, divinylnaphthalene and divinylxylene) and non-aromatic crosslinking monomers (such as ethyleneglycol diacrylate, ethyleneglycol dimethacrylate, trimethylolpropane triacrylate, trimethylolpropane trimethacrylate, diethyleneglycol divinyl ether, 1,5-hexadiene, 2,5-dimethyl-1,5-hexadiene, 1,7-octadiene, trivinylcyclohexane and triallyl isocyanurate). Preferably, the crosslinkers are selected from one or more of divinylbenzene (DVB), trivinylcyclohexane (TVCH), 1,7-octadiene and diethyleneglycol divinylether. Typically, the crosslinked polycarboxylate resin precursor contains 0.5 to 40%, preferably 1 to 25%, more preferably 2 to 20% and most preferably 3 to 15%, of crosslinker, based on weight of crosslinker in the polycarboxylate resin precursor prior to hydrolysis to the carboxylate form. For example, crosslinked poly(methyl acrylate) or crosslinked poly(acrylonitrile) precursors would be subjected to acidic or basic hydrolysis to provide the corresponding crosslinked poly(acrylic acid) weak acid cation exchange resins.

Although detailed descriptions of the hydrolysis of crosslinked poly(acrylonitrile) or poly(acrylate) substrates to provide the corresponding weak acid cation exchange resins are available, little attention has been directed to the washing conditions used after hydrolysis and just prior to providing the WAC resin in its finished form. For example, post-hydrolysis treatments are typically characterized by washing of the caustic-hydrolyzed crosslinked poly(acrylonitrile) intermediate, conversion to hydrogen-form with excess acid and washing until neutral (U.S. Patent Nos. 3,544,488, 3,687,912 and 5,175,193). Similarly, post-hydrolysis treatment of caustic hydrolyzed crosslinked poly(acrylate) intermediates is characterized by washing with 1N hydrochloric acid (U.S. Patent No. 4,614,751).

The process of the present invention involves starting with a WAC substantially in the neutralized salt-form, that is, where at least about 90% of the carboxylic acid functionality is in the salt form. Suitable neutralized salt forms include, for example, sodium, potassium, lithium and ammonium salts; preferably the WAC is provided in the sodium-form. The neutralized salt-form WAC may be provided directly from an alkaline hydrolysis reaction of a crosslinked polycarboxylate resin precursor, by conversion of the hydrogen-form WAC (such as from the acidic hydrolysis of a crosslinked polycarboxylate resin precursor) to the neutralized salt-form by conventional regeneration methods (see below), or by conventional regeneration of any available hydrogen-form WAC to the neutralized salt-form. The neutralized salt-form WAC may be converted to the hydrogen-form (as described below) or optionally backwashed first, or further washed with additional water (ambient temperature up to about 90°C), prior to conversion to the hydrogen-form. Preferably, the neutralized salt-form WAC is washed (backflow or downflow) with water at 60-90°C prior to conversion to the hydrogen-form.

The acid regenerant useful in converting the neutralized salt-form WAC to the hydrogen-form WAC can be any strong acid, such as mineral acid, for example, sulfuric acid, hydrochloric acid, phosphoric acid or nitric acid. Preferably, the acid regenerant is selected from one or more of sulfuric acid and hydrochloric acid. Typically, regeneration is conducted by contacting (downflow or upflow column treatment) the WAC with an excess of acid regenerant, generally from 2 to 4 molar equivalents of acid regenerant per equivalent of WAC. The acid regenerant solution is typically a dilute aqueous solution of the acid, such as 0.5 to 20% acid, preferably from 1 to 15% and more preferably from 2 to 10%, based on weight of the aqueous solution.

Alternatively, the neutralized salt-form WAG may be converted to the hydrogen-form WAC by regeneration with any weak acid having a pKₐ between 3 and 7, preferably between 4 and 7, and more preferably between 4 and 6.5. Suitable weak acid regenerants include, for example, carbonic acid and carboxylic acids such as acetic acid, citric acid, maleic acid, lactic acid and mixtures thereof; when used, the weak acid regenerant is preferably selected from one or more of citric acid and carbonic acid.

Typical regeneration (conversion from hydrogen-form to sodium-form versions, and vice versa) of the WAC involves treatment with the appropriate reagents, typically at temperatures from ambient (room) temperature up to about 90°C, at flow rates of about 1 bed volume (BV), typically up to 10 BV, of regenerant per hour. For example, conversion of a hydrogen-form WAC to the sodium-form and back into the hydrogen-form would typically involve the following sequence: four bed volumes of 7% aqueous sodium hydroxide solution, two bed volumes of water, four bed volumes of 7% aqueous hydrochloric acid solution, and two bed volumes of water.

The hydrogen-form resin is then steam treated at a resin bed temperature of 100 to 180°C, preferably from 110 to 150°C and more preferably from 120 to 140°C, for at least 1 hour (typically 1 to 15 hours, preferably 1 to 10 hours and more preferably 2 to 4 hours) in the hydrogen-form to provide a WAC suitable for use in drinking water-treatment systems. Typically at least 1 kg steam, preferably from 1 to 15 kg, more preferably from 2 to 10 kg and most preferably from 2 to 5 kg, is used per kg WAC. The steam treatment may be conducted conveniently by pressurized steam injection into a bed of WAC or by external heating of a wash column containing WAC; typically pressurized steam injection is used at pressures of 0.1-7 x 10³ kPa (1 to 1000 pounds per square inch gauge, psig), preferably 0.17-3.5 x 10³ kPa (10 to 500 psig) and more preferably 2.4-7 x 10² kPa (20 to 100 psig). The steam treatment may be conducted by contacting the hydrogen-form WAC with steam by upflow, downflow (typically in columns) or in a batch mode (such as pressure kettle). Typically, the hydrogen-form WAC is isolated by draining the steam-treated resin free of residual surface water, followed by pack out.

If the steam treatment is conducted below about 100°C or the contact time of the treatment is less than about 1 hour, the quality of the final resin as measured by the efficiency of THM removal by mixed-bed systems containing the WAC is unsatisfactory. For example, if only a hot-water wash (temperature of 80 to 90°C) is used to treat the hydrogen-form WAC, the WAC will contain undesirable residual extractable materials that contribute odor to the treated resin.

After steam-treatment and before final packout of the WAC, additional optional treatments may be applied to the WAC. For example, steam-treated WAC may be given a final dilute acid-wash to remove low levels of any basic contaminants from the processing steps, comprising contacting the hydrogen-form WAC in a downflow mode with 2 to 5 bed-volumes of dilute acid (such as aqueous solutions of 0.05-1N sulfuric acid, hydrochloric acid, phosphoric acid or nitric acid) and then rinsing the hydrogen-form WAC with water prior to final packout. Preferably, the optional acid-wash involves using 0.1N sulfuric acid.

Other optional treatments prior to final packout of the finished WAC include, for example, backwashing to remove fines (small-sized resin particle contaminants), and treatment to minimize antimicrobial growth in the finished resin. For example, steam-treated WAC may be given an antimicrobial treatment comprising contacting the hydrogen-form WAC with 0.4 to 5 g, preferably 0.5 to 3 g and more preferably 0.7 to 2 g, of an antimicrobial agent per kg of hydrogen-form WAC prior to final packout. Typically, the optional antimicrobial treatment involves use of an antimicrobial agent selected from one or more of peroxides, (C₂-C₃)alcohols, and inorganic chloride salts. Suitable peroxides include, for example, hydrogen peroxide and peracetic acid; suitable alchohols include, for example, ethanol and isopropanol; suitable inorganic chloride salts include, for example, sodium chloride and potassium chloride. Preferably, when peroxides are used in the antimicrobial treatment, the level used is from 0.5 to 1.5 g peroxide per kg WAC.

We have found that it is critical to conduct the steam treatment step on the WAC in the hydrogen-form. If the steam treatment is conducted on the sodium-form of the WAC, followed by conversion to the hydrogen-form WAC (without any steam-treatment of the hydrogen-form resin), the desired beneficial results are not achieved.

Typically, WAC are washed free of any contaminants in the sodium-form because the ionized (neutralized) form of the carboxylic acid functionality is more fully hydrated than the less ionized hydrogen (un-neutralized) form and the neutralized form is considered to have a more swollen, open molecular structure, thus facilitating transport of undesirable materials out of the crosslinked polymer matrix. Thus, we unexpectedly found that WAC treated by the process of the present invention, that is, steam treatment step on the WAC in the hydrogen-form, provided a "cleaner" final form WAC as evidenced by enhanced THM removal of cartridge-type water treatment systems containing the WAC resin as part of a mixed-bed system. In contrast, WAC treated in the conventional manner, that is, steam treatment step of the WAC in the sodium-form, resulted in less efficient THM removal of cartridge-type water treatment systems. Steam treatment in the hydrogen-form further provides an economic benefit by allowing a greater quantity of WAC to be treated per treatment step (typically in 1000-L wash columns) due to the greater density of the hydrogen (free acid) form of the resin relative the sodium (neutralized) form.

The effectiveness of the process of the present invention was demonstrated by evaluating the efficiency of the WAC (subjected to the process of the present invention) for removing THM (using chloroform as a representative THM material) from contaminated water using a mixed bed of treated WAC resin plus activated carbon in a "pitcher-type drinking water filter" arrangement, such as described in U.S. Patent Nos. 4,895,648, 4,969,996 and 6,012,232.

Table 1 summarizes the results of THM removal efficiency using WAC resins treated by the process of the present invention and WAC resins conditioned by various other routes.

Resin 1 (comparative) is representative of a commercially available WAC provided in the hydrogen-form (Bayer Lewatit™ CNP resin)

Resin 2 (comparative) is representative of a comparative treatment where the WAC derived from acidic hydrolysis (hydrogen-form) was subjected to steam treatment in the hydrogen form (see conditions described in Example 1). This resin did not undergo a conversion to the sodium-form during its processing.

Resin 3 (comparative) is representative of a comparative treatment where the WAC derived from acidic hydrolysis (hydrogen-form) was converted to the sodium-form followed by steam treatment (see conditions described in Example 1) in the sodium form. The resin was then regenerated to hydrogen-form prior to THM efficiency evaluation. This resin did not undergo a steam-treatment while in the hydrogen-form.

Resin 4 is representative of a treatment by the process of the present invention where the WAC (hydrogen-form) derived from acidic hydrolysis was first regenerated to the sodium-form, followed by regeneration back to the hydrogen-form, and finally subjected to steam treatment in the hydrogen-form.

For each of the resins Table 1, the results represent an average of 3 separate chloroform removal evaluations involving 3 different lots of each resin.

**Table 1 |<== Percent Chloroform Removed ==>**

| **Liters (L) of Water Treated** | **Resin 1 (comp)** | **Resin 2 (comp)** | **Resin 3 (comp)** | **Resin 4** |
|---|---|---|---|---|
| 4 | 84 | 79 | 80 | 84 |
| 8 | 77 | 77 | 80 | 84 |
| 12 | 79 | 74 | 79 | 81 |
| 16 | 76 | 69 | 79 | 80 |
| average (1-16 L) | 79 | 75 | 79 | 82 |
| Δ* | -3 | -7 | -8 | ----- |
| 20 | 70 | 72 | 75 | 77 |
| 24 | 68 | 68 | 72 | 76 |
| 28 | 72 | 66 | 72 | 78 |
| 32 | 67 | 65 | 70 | 72 |
| average (17-32 L) | 69 | 68 | 72 | 76 |
| Δ* | -7 | -8 | -4 | ----- |
| average (1-32 L) | 74 | 71 | 76 | 79 |
| Δ* | -5 | -8 | -8 | ----- |

| | | | | |
|---|---|---|---|---|
| * = difference between comparative Resins 1, 2 or 3 and Resin 4 | | | | |
| "% chloroform removal" value = [Resin 1, 2, or 3] - [Resin 4] = Δ | | | | |

The improvement in efficiency of THM removal for water-treatment systems containing WAC treated by the process of the present invention was demonstrated by comparing "% chloroform removed" values for Resin 4 in Table 1 to the comparative Resins 1, 2 and 3. For example, for the first 16 liters of treated water, Resin 4 provided an additional 3-7% in chloroform removal efficiency versus comparative Resins 1, 2 and 3. For the next 16 liters of treated water, Resin 4 retained its chloroform removal efficiency to a greater degree than did Resins 1, 2 and 3, by providing an additional 4-8% improvement in efficiency. Overall, for 32 liters of treated water, Resin 4 provided an additional 3-8% in chloroform removal efficiency relative to the performance of comparative Resins 1, 2 and 3.

Some embodiments of the invention are described in detail in the following Examples. All ratios, parts and percentages are expressed by weight unless otherwise specified, and all reagents used are of good commercial quality unless otherwise specified. Abbreviations used in the Examples and Tables are listed below:

| | |
|---|---|
| BV = | Bed Volume (volume of ion exchange resin bed, including interstitial water) |
| WAC = | Weak Acid Cation Exchange Resin |
| THM = | Trihalomethanes (chloroform) |
| GAC = | Granulated Activated Carbon |
| meq/g = | Milliequivalents per Gram |
| meq/ml = | Milliequivalents per Milliliter |

### Example 1

The WAC used a starting material in the evaluation of Resins 2, 3 and 4 (Table 1) were based on a resin derived from acid hydrolysis of a suspension polymer of crosslinked poly(acrylonitrile) containing 6% non-aromatic crosslinker. The resultant hydrogen-form WAC had a moisture holding capacity of 55% and a cation exchange capacity of 11.0 meq/g (4.0 meq/ml). The WAC corresponding to Resin 1 (Table 1) was a commercial hydrogen-form WAC (Bayer Lewatit^{TM} CNP resin having a moisture holding capacity of 50% and a cation exchange capacity of 10.5 meq/g (4.2 meq/ml).

The hydrogen-from WAC were converted to the neutralized sodium-form by the following procedure. A sample (typically 0.1-0.5 liters) of hydrogen-form WAC was placed in an appropriately sized wash column (typically 2-5 cm internal diameter) and washed in a down flow manner with 4 BV of 7% aqueous sodium hydroxide solution at a flow rate of approximately 1-2 BV/hour. The resin bed was then rinsed with deionized water until excess sodium hydroxide regenerant had been removed (pH of the effluent rinse water less than about 9, preferably less than 8.5).

The sodium-form WAC was then converted to the free-acid hydrogen-form by the following procedure. A sample of sodium-form WAC was washed in a down flow manner (similar arrangement described above) with 7 BV of 7% aqueous sulfuric acid solution over 1 hour. The resin bed was then rinsed with deionized water until excess sulfuric acid regenerant had been removed (pH of the effluent rinse water greater than about 4, preferably greater than 4.5).

### Example 2

With the WAC in the hydrogen-from, the resins are subjected to steam treatment according to the following procedure. Hydrogen-form WAC is down flow steam-treated at 125-135°C for 4 hours using at 100-1000 g, typically 400-800 g, steam per 100 g resin. The steam-treated resin is then backwashed for approximately 2 hours with deionized water until free of visible fine particles and then finally washed down flow for 2 hours using 600 ml deionized water per 100 g resin.

### Example 3

THM removal efficiency of WAC resins was determined by using a water-pitcher drinking water filter simulation and measuring the percentage of THM (chloroform) removed per volume of water treated with cartridges containing a mixed bed of weak acid cation resin (prepared as described in Example 1) and granular activated carbon (GAC). A common source of GAC was used throughout to make up the mixed resin beds for evaluation. This method directly relates to the effectiveness of a pitcher-type drinking water filter's ability to remove THMs.

Challenge ("contaminated") water was prepared as follows. Into a clean, covered 20-liter plastic pail was placed 2.02 g CaCl₂•2H₂O, 0.48 g MgSO₄•6H₂O, 2.69 g NaHCO₃ and 16-liters of deionized water. THM stock solution (approximately 1-ml of 1% chloroform in methanol) calibrated to deliver approximately 250-400 ppb chloroform was then added and the mixture stirred for 10 minutes. The solution was promptly transferred into four 4-liter amber bottles and sealed with Teflon™ lined caps. The challenge-water was used within 24 hours of preparation.

The mixed-bed cartridges were prepared by placing 90 ml of WAC into a pitcher, adding 30 ml of GAC and swirling until mixed (usually less than 30 seconds) and then pouring this mixture into an empty cylinder cartridge (95 mm body length, 45-50 mm diameter, 32 mm cap length). The cartridge was sealed with an end-cover (lid) and placed into a 600-ml beaker and tap water was added up to the shoulder of the cartridge. The cartridge was soaked for 15 minutes and then placed into a filter pitcher with cover. One liter of tap water was poured through the cartridge and allowed to drain (elute) through the cartridge to remove color contaminants (fines) from the GAC - some initial dark water was normal and was typically eluted in the first BV (about 100 ml) - the water was clear by the end of the one liter elution and the elution water was discarded. The rinsed cartridge was then subjected to the test procedure.

The test cartridge was placed in a Millipore^{TM} filter body housing and connected to a 1-liter water-pitcher top via Teflon tubing. A pump situated between the test cartridge and the water-pitcher (Brita™ pitcher bottom) was used to produce treated water effluent at a constant flow rate. Challenge-water (containing approximately 250-400 ppb THM, as chloroform) was added to the filter-body housing and the pump was started to deliver "treated" challenge-water to the water-pitcher. The water-pitcher was emptied after every 1-2 liters of treated water had been delivered. A sample for THM analysis was then taken after 4 liters of treated water had been delivered to the water-pitcher. Typically a total of at least 32 liters of treated water was generated with samples taken every 4 to 8 liters. THM analyses were provided by Lancaster Laboratories (Lancaster, PA, USA) using EPA (Environmental Protection Agency) Test Method 502.2 for residual chloroform. Analytical samples using Lancaster Laboratory sample vials with pre-formulated preservative ascorbic acid/HCl solution were refrigerated prior to analysis and analyses were conducted within 24-48 hours of sampling.

Results from representative individual THM removal evaluations of WAC treated by a comparative treatment and the process of the present invention (Resins 3 and 4 in Table 1) are summarized in Tables 2 and 3, respectively. Additional results, including comparative treatments, are presented in Table 1.

**Table 2 (Resin 3)**

| Sample # | Total Effluent Water Treated (L) | THM Concentration (ppb) Feed | THM Concentration (ppb) Effluent | % THM Removed* |
|---|---|---|---|---|
| 1 | 4 | 250 | 61 | 76 |
| 2 | 8 | 280 | 74 | 74 |
| 3 | 12 | 260 | 47 | 82 |
| 4 | 16 | 250 | 65 | 74 |
| 5 | 20 | 240 | 61 | 75 |
| 6 | 24 | 280 | 85 | 70 |
| 7 | 28 | 370 | 110 | 70 |
| 8 | 32 | 350 | 110 | 69 |

| | | | | |
|---|---|---|---|---|
| * = [(Feed - Effluent)/(Feed)] X 100 | | | | |

**Table 3 (Resin 4)**

| Sample # | Total Effluent Water Treated (L) | THM Concentration (ppb)Feed | THM Concentration (ppb) Effluent | % THM Removed* |
|---|---|---|---|---|
| 1 | 4 | 250 | 43 | 83 |
| 2 | 8 | 280 | 57 | 80 |
| 3 | 12 | 260 | 41 | 84 |
| 4 | 16 | 250 | 53 | 79 |
| 5 | 20 | 240 | 55 | 77 |
| 6 | 24 | 280 | 66 | 76 |
| 7 | 28 | 370 | 82 | 78 |

| | | | | |
|---|---|---|---|---|
| * = [(Feed - Effluent)/(Feed)] X 100 | | | | |

## Claims

1. A process for cleaning weak acid cation exchange resins comprising:
(a) converting a weak acid cation exchange resin, substantially in neutralized salt form, to a hydrogen-form weak acid cation exchange resin by regenerating with an acid regenerant; and
(b) contacting the hydrogen-form weak acid cation exchange resin with 1 to 15 kilograms of steam per kilogram of hydrogen-form weak acid cation exchange resin at a resin bed temperature of 100 to 180°C for a period of at least one hour.

2. The process of claim 1 wherein the weak acid cation exchange resin is selected from one or more copolymers of crosslinked poly(acrylic acid), crosslinked poly(methacrylic acid), hydrolyzed crosslinked poly((C₁-C₄)alkyl acrylate) and hydrolyzed crosslinked poly(acrylonitrile).

3. The process of claim 1 wherein the acid regenerant in step (a) is selected from one or more of 1 to 15 percent aqueous solutions of sulfuric acid and hydrochloric acid.

4. The process of claim 1 wherein step (b) is conducted at a resin bed temperature of 120 to 140°C.

5. The process of claim 1 wherein the hydrogen-form weak acid cation exchange resin in step (b) is contacted with 2 to 5 kilograms of steam per kilogram of hydrogen-form weak acid cation exchange resin.

6. The process of claim 1 wherein the hydrogen-form weak acid cation exchange resin in step (b) is contacted with steam for 2 to 4 hours.

7. The process of claim 1 further comprising contacting the hydrogen-form weak acid cation exchange resin from step (b) with 0.4 to 5 grams, per kilogram of hydrogen-form weak acid cation exchange resin, of an antimicrobial agent selected from one or more of peroxides, (C₂-C₃)alcohols and inorganic chloride salts.

8. The process of claim 7 wherein the antimicrobial agent is selected from one or more of hydrogen peroxide, peracetic acid, ethanol, isopropanol, sodium chloride and potassium chloride.

9. The process of claim 1 further comprising contacting the hydrogen-form weak acid cation exchange resin from step (b) with 2 to 5 bed-volumes of dilute acid and then rinsing the hydrogen-form weak acid cation exchange resin with water.

10. The process of claim 9 wherein the dilute acid is selected from one or more of 0.05 to 1 N aqueous solution of sulfuric acid, hydrochloric acid and phosphoric acid.

## Patentansprüche

1. Verfahren zum Reinigen von schwach sauren Kationenaustauscherharzen, umfassend:
(a) das Umwandeln eines schwach sauren Kationenaustauscherharzes, welches im Wesentlichen in neutralisierter Salzform vorliegt, in ein schwach saures Kationenaustauscherharz in Wasserstoffform durch Regenerieren mit einem sauren Regenerierungsmittel, und
(b) das Inkontaktbringen des schwach sauren Kationenaustauscherharzes in Wasserstoffform mit 1 bis 15 Kilogramm an Dampf pro Kilogramm an schwach saurem Kationenaustauscherharz in Wasserstoffform bei einer Harzbetttemperatur von 100 bis 180°C für eine Zeitdauer von mindestens einer Stunde.

2. Verfahren nach Anspruch 1, wobei das schwach saure Kationenaustauscherharz aus einem oder mehreren Copolymeren von vernetzter Poly(acrylsäure), vernetzter Poly(methacrylsäure), hydrolysiertem, vernetztem Poly((C₁-C₄)alkylacrylat) und hydrolysiertem, vernetztem Poly(acrylnitril) ausgewählt ist.

3. Verfahren nach Anspruch 1, wobei das saure Regenerierungsmittel in Schritt (a) aus einem oder mehreren von 1 bis 15%igen wässerigen Lösungen von Schwefelsäure und Salzsäure ausgewählt ist.

4. Verfahren nach Anspruch 1, wobei Schritt (b) bei einer Harzbetttemperatur von 120 bis 140°C durchgeführt wird.

5. Verfahren nach Anspruch 1, wobei das schwach saure Kationenaustauscherharz in Schritt (b) mit 2 bis 5 Kilogramm an Dampf pro Kilogramm an schwach saurem Kationenaustauscherharz in Wasserstoffform in Kontakt gebracht wird.

6. Verfahren nach Anspruch 1, wobei das schwach saure Kationenaustauscherharz in Wasserstoffform in Schritt (b) mit Dampf für 2 bis 4 Stunden in Kontakt gebracht wird.

7. Verfahren nach Anspruch 1, welches ferner das Inkontaktbringen des schwach sauren Kationenaustauscherharzes in Wasserstoffform aus Schritt (b) mit 0,4 bis 5 Gramm, pro Kilogramm an schwach saurem Kationenaustauscherharz in Wasserstoffform, eines antimikrobiellen Mittels, ausgewählt aus einem oder mehreren von Peroxiden, (C₂-C₃)Alkoholen und anorganischen Chloridsalzen, umfasst.

8. Verfahren nach Anspruch 7, wobei das antimikrobielle Mittel aus einem oder mehreren von Wasserstoffperoxid, Peressigsäure, Ethanol, Isopropanol, Natriumchlorid und Kaliumchlorid ausgewählt ist.

9. Verfahren nach Anspruch 1, welches ferner das Inkontaktbringen des schwach sauren Kationenaustauscherharzes in Wasserstoffform aus Schritt (b) mit 2 bis 5 Bettvolumen an verdünnter Säure und dann Waschen bzw. Spülen des schwach sauren Kationenaustauscherharzes in Wasserstoffform mit Wasser umfasst.

10. Verfahren nach Anspruch 9, wobei die verdünnte Säure aus einem oder mehreren von 0,05 bis 1 N wässeriger Lösung von Schwefelsäure, Salzsäure und Phosphorsäure ausgewählt ist.

## Revendications

1. Procédé pour le nettoyage de résines échangeuses de cations faiblement acides comprenant :
(a) la transformation d'une résine échangeuse de cations faiblement acide, pratiquement dans une forme de sel neutralisé, en une résine échangeuse de cations faiblement acide de forme hydrogène par régénération avec un régénérant acide ; et
(b) la mise en contact de la résine échangeuse de cations faiblement acide de forme hydrogène avec de 1 à 15 kilogrammes de vapeur par kilogramme de résine échangeuse de cations faiblement acide de forme hydrogène à une température de lit de résine de 100 à 180°C sur une durée d'au moins 1 h.

2. Procédé selon la revendication 1, dans lequel la résine échangeuse de cations faiblement acide est choisie parmi un ou plusieurs copolymères de poly(acide acrylique) réticulé, de poly(acide méthacrylique) réticulé, de poly(acrylate d'alkyle en C₁-C₄) hydrolysé réticulé et de poly(acrylonitrile) hydrolysé réticulé.

3. Procédé selon la revendication 1, dans lequel le régénérant acide dans l'étape (a) est choisi parmi une ou plusieurs solutions aqueuses à de 1 à 15 % d'acide sulfurique et d'acide chlorhydrique.

4. Procédé selon la revendication 1, dans lequel l'étape (b) est réalisée à une température de lit de résine de 120 à 140°C.

5. Procédé selon la revendication 1, dans lequel la résine échangeuse de cations faiblement acide de forme hydrogène dans l'étape (b) est mise en contact avec de 2 à 5 kilogrammes de vapeur par kilogramme de résine échangeuse de cations faiblement acide de forme hydrogène.

6. Procédé selon la revendication 1, dans lequel la résine échangeuse de cations faiblement acide de forme hydrogène dans l'étape (b) est mise en contact avec de la vapeur pendant de 2 à 4 h.

7. Procédé selon la revendication 1 comprenant en outre la mise en contact de la résine échangeuse de cations faiblement acide de forme hydrogène de l'étape (b) avec de 0,4 à 5 g, par kilogramme de résine échangeuse de cations faiblement acide de forme hydrogène, d'un agent antimicrobien choisi parmi un ou plusieurs peroxydes, alcools en C₂-C₃ et sels de chlorure inorganique.

8. Procédé selon la revendication 7, dans lequel l'agent antimicrobien est choisi parmi un ou plusieurs parmi le peroxyde d'hydrogène, l'acide peracétique, l'éthanol, l'isopropanol, le chlorure de sodium et le chlorure de potassium.

9. Procédé selon la revendication 1 comprenant en outre la mise en contact de la résine échangeuse de cations faiblement acide de forme hydrogène de l'étape (b) avec de 2 à 5 volumes de lit d'acide dilué et le rinçage subséquent de la résine échangeuse de cations faiblement acide de forme hydrogène avec de l'eau.

10. Procédé selon la revendication 9, dans lequel l'acide dilué est choisi parmi une ou plusieurs solutions aqueuses 0,05 à 1 N d'acide sulfurique, d'acide chlorhydrique et d'acide phosphorique.
